# EUROPEAN PATENT APPLICATION

(11) **EP 2 757 566 A1**
(43) Date of publication of application: **23.07.2014**
(21) Application number: 12832082.7
(22) Date of filing: 12.09.2012
(51) Int. Cl.: H01H 13/06, H01H 13/52

(54) **PUSH-BUTTON SWITCH AND ADHESIVE TAPE FOR PUSH-BUTTON SWITCH**

(30) Priority: 12.09.2011 JP 2011198453
(71) Applicant: Nitto Denko Corporation, Ibaraki-shi, Osaka 567-8680 (JP)
(72) Inventor: KIGAMI Hiroki, Osaka (JP); TACHIBANA Toshimitsu, Osaka (JP)
(74) Representative: Grünecker, Kinkeldey, Stockmair & Schwanhäusser
(86) International application number: PCT/JP2012/073359
(87) International publication number: WO 2013/039116

(57) **Abstract**

The push-button switch of the present invention contains a pressure-sensitive adhesive tape sealing an opening of a housing; a fixed contact part is provided on a bottom surface in the housing, and a movable contact part is provided in the housing; the pressure-sensitive adhesive tape contains a supporting base material and a pressure-sensitive adhesive layer; the pressure-sensitive adhesive layer of the pressure-sensitive adhesive tape is in contact with a part of the housing and a part of the movable contact part; the supporting base material of the pressure-sensitive adhesive tape has a thickness of at least 25 µm and at most 100 µm, and the supporting base material has a difference in the rate of dimensional change in the lengthwise and crosswise directions of after heating from ±0.01% to ±6%, and has a tensile strength of at least 0.7 N/mm.

## Description

### TECHNICAL FIELD

The present invention relates to a push-button switch and a pressure-sensitive adhesive tape for a push-button switch, and particularly to a push-button switch suitably applicable to portable electronic devices such as cell-phones, portable players and digital cameras.

### BACKGROUND ART

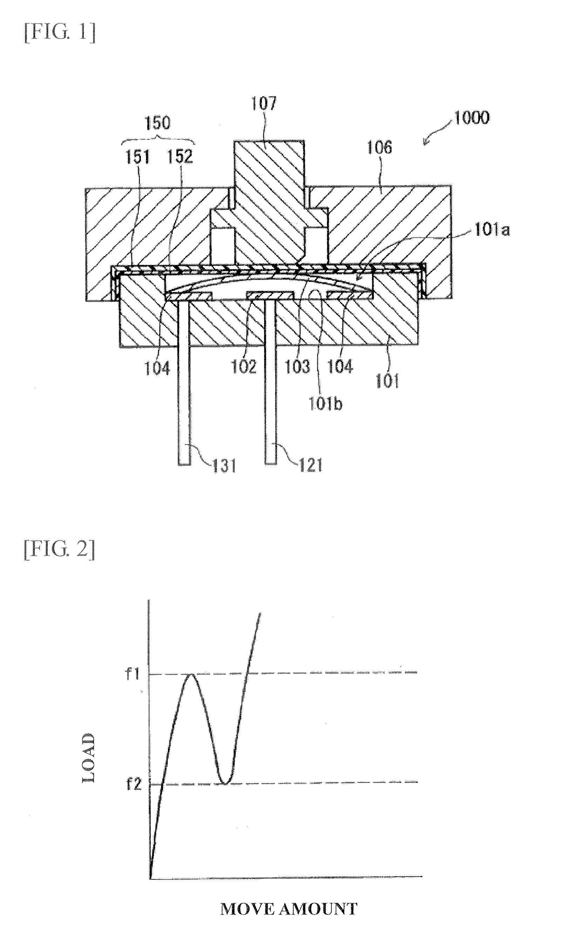

A number of push-button switches are used in portable electronic devices such as cell-phones, portable players and digital cameras. Specifically, push-button switches that is activated by click action are used as number switches (or keyboard switches), power switches and the like of portable electronic devices (e.g., cell-phones). Such a push-button switch 1000 is shown in FIG. 1.

The push-button switch 1000 shown in FIG. 1 is composed of a housing 101 having an opening 101a in an upper portion thereof and a pressure-sensitive adhesive tape 150 for sealing the opening 101a. A fixed contact part 102 is provided on a bottom surface 101b in the housing 101. In the housing 101, a movable contact part 103 is provided over the fixed contact part 102 so as to cover the fixed contact part 102.

The movable contact part 103 has a dome shape so as to cause inverting action. A lower end of the dome-shaped movable contact part 103 is in contact with an electrode 104 disposed on the bottom surface 101b in the housing 101. That is to say, the lower end of the dome-shaped movable contact part 103 is supported by local contact with the electrode 104. Here, a space between the fixed contact part 102 and the movable contact part 103 is in communication with a space outside the movable contact part 103. Incidentally, a lead 121 is connected to the fixed contact part 102, and a lead 131 is connected to the electrode 104.

The opening 101a of the housing 101 is provided with the pressure-sensitive adhesive tape 150 for sealing the opening 101a. The pressure-sensitive adhesive tape 150 is composed of a supporting base material 151 and a pressure-sensitive adhesive layer 152. A frame 106 is attached onto the housing 101 with the interposition of the pressure-sensitive adhesive tape 150, and a stem 107 is mounted in a central opening of the frame 106. The stem 107 is slidably mounted in the frame 106. The stem 107 moves downward by pushing the stem 107, and a central part of the dome-shaped movable contact part 103 can be brought into contact with the fixed contact part 102 thereby.

FIG. 2 is a graph showing the relationship between the load and move amount of the stem 107 in the push-button switch 1000. As shown in FIG. 2, when reaches a certain load f1 (acting force), the movable contact part 103 performs inverting action to move at a load lower than the previous load. Then, the stem 107 reaches a completely pushed state at a certain load f2 (returning force), and after that, the stem 107 does not substantially move even when the load is increased.

In the load-move amount diagram of the push-button switch 1000, the load depends on modified rigidity of a member that resists movements of the stem 107, mainly on bending rigidity. When the maximum load f1 (acting force) is large, a hard-touch feeling is obtained, and when the maximum load is small, a soft-touch feeling is obtained.

Further, in mounting of the push-button switch 1000 on a circuit board, a reflow soldering process is used. In a coating step of a flux by this soldering, it becomes necessary to seal the opening 101a of the housing 101 with the pressure-sensitive adhesive tape 150 in preventing the flux from entering between the fixed contact part 102 and the movable contact part 103 to guarantee good contact contactability. Furthermore, the sealing of the opening 101a of the housing 101 with the pressure-sensitive adhesive tape 150 concurrently prevents the occurrence of a contact failure between the fixed contact part 102 and the movable contact part 103 due to dust entering from a gap between the housing 101 and the frame 106.

### CITATION LIST

### PATENT LITERATURE

Patent Document 1: JP-A-2003-281969
Patent Document 2: JP-A-2004-95461
Patent Document 3: JP-A-2004-244586

### SUMMARY OF THE INVENTION

### PROBLEM THAT THE INVENTION IS TO SOLVE

It is necessary for the pressure-sensitive adhesive tape 150 to be adhered to an upper end surface of the opening 101a of the housing 101, and moreover, to flexibly follow up-and-down movements of the stem 107. Flexibility is therefore necessary for the supporting base material 151 of the pressure-sensitive adhesive tape 150, and generally, a fluororesin sheet is used. In particular, polytetrafluoroethylene has been used as the fluororesin.

The push-button switch 1000 has proceeded toward a reduction in size and a reduction in thickness, so that because of this, the pressure-sensitive adhesive tape 150 has also been required to be reduced in thickness. However, when the reduction in thickness is promoted, parts are reduced in size, resulting in necessity of further accuracy. In this case, poor thickness accuracy of the pressure-sensitive adhesive tape 150 causes disadvantages at the time when the housing 101 and the frame 106 are assembled, such as formation of a gap or inclining of the stem 107 because of the inability to be parallel. Further, when the pressure-sensitive adhesive layer 152 of the pressure-sensitive adhesive tape 150 is reduced in thickness, the usual thickness thereof is from about 5 to 50 µm. However, in order to bring out adhesive force to be required, the pressure-sensitive adhesive layer 152 cannot be made thinner than this thickness, and the reduction in thickness of the pressure-sensitive adhesive layer 152 reaches a limit.

Patent Document 1 discloses a pressure-sensitive adhesive tape 150 in which a supporting base material 151 composed of a fluororesin sheet is adjusted to 22 µm or less and further to 16 µm or less. Incidentally, Patent Document 1 discloses use of the supporting base material 151 obtained by forming the fluororesin into a sheet by a casting method, because it is substantially impossible to reduce the thickness of the supporting base material 151 composed of the fluororesin sheet to 15 µm or less by cutting.

However, according to studies of the present inventors, in use of the supporting base material 151 composed of the fluororesin sheet as disclosed in Patent Document 1, it has been revealed that the pressure-sensitive adhesive tape 150 might be deformed when the pressure-sensitive adhesive tape 150 is peeled off from a release liner or when the pressure-sensitive adhesive tape 150 is stuck to the housing (box) 101, because of the weakened strength of the supporting base material 151. Further, when the push-button switch 1000 is subjected to reflow soldering, the rate of shrinkage of the pressure-sensitive adhesive tape 150 increases, and it becomes impossible in some case that a pressure-sensitive adhesive of the pressure-sensitive adhesive layer 152 withstands this stress, thereby resulting in peeling off from an end of the tape.

Furthermore, Patent Document 2 discloses a supporting base material 151 composed of a polyimide film or a polyamide film that can be formed to a thickness of 15 µm or less, because the thickness of the supporting base material 151 composed of the fluororesin sheet cannot be reduced substantially to 15 µm or less by cutting. However, in the case of the supporting base material 151 composed of the polyimide film or the polyamide film, since the base material is poor in sliding properties and flexibility as compared to the supporting base material 151 composed of the fluororesin sheet, there is encountered a problem that when the push-button switch is pushed, smooth touch is not obtained.

In addition, Patent Document 3 discloses a pressure-sensitive adhesive tape 150 composed of a supporting base material 151 obtained by cutting a molded-fired product of a molding powder of PTFE to a thickness of 8 to 50 µm. However, according to studies of the present inventors, when the supporting base material 151 of Patent Document 3 is used, it has been revealed that the pressure-sensitive adhesive tape 150 shrinks sometimes to peel off from an end thereof in the case where the push-button switch 1000 is subjected to reflow soldering, because the strain of the sheet caused by cutting and the difference in the rate of dimensional change in the lengthwise and crosswise directions after heating are large.

That is to say, in Patent Documents 1 to 3 described above, the reduction in thickness of the supporting base material 151 raises additional problems. From a practical aspect, additional studies and improvements have been required. Further, in Patent Documents 1 to 3, a viewpoint of conditions that are further necessary in conditions at a predetermined thickness is lacking, although the preferred thickness and ordinary thickness of the supporting base material 151 is disclosed. Additional studies and improvements have been required also in that point.

Under such circumstances, the present inventors have reviewed an approach to a further reduction in thickness (reduction in film thickness) of the supporting base material 151, which is aimed for by those skilled in the art, and they have reversely increased the thickness of the supporting base material 151 to some extent, different from common sense of those skilled in the art and have challenged development of a pressure-sensitive adhesive tape for a push-button switch, which can withstand practical use within the thickness condition. As a result of intensive studies, they have reached the present invention.

The present invention has been made in view of such points, and a main object thereof is to provide a push-button switch in which floating of a pressure-sensitive adhesive tape at the time of performing reflow soldering is suppressed, and a push-button switch pressure-sensitive adhesive tape.

### MEANS FOR SOLVING THE PROBLEM

The push-button switch according to the present invention contains a housing having an opening in an upper portion thereof and a pressure-sensitive adhesive tape sealing the opening of the housing. On a bottom surface in the housing, a fixed contact part is provided, and in the housing, a dome-shaped movable contact part is provided so as to cover the fixed contact part. The pressure-sensitive adhesive tape contains a supporting base material and a pressure-sensitive adhesive layer formed on one side of the supporting base material. The pressure-sensitive adhesive layer of the pressure-sensitive adhesive tape is in contact with a part of the housing and a part of the movable contact part, and the supporting base material of the pressure-sensitive adhesive tape has a thickness of at least 25 µm and at most 100 µm The supporting base material has a difference in the rate of dimensional change in the lengthwise and crosswise directions of the supporting base material after heating of from ±0.01% to ±6%, and the supporting base material has a tensile strength of at least 0.7 N/mm.

In one preferred embodiment, the supporting base material is a fluororesin base material formed into a sheet by a casting method.

In one preferred embodiment, the thickness of the supporting base material is at least 50 µm and at most 100 µm.

The portable electronic device according to the present invention contains the above-described push-button switch and a stem of pushing the movable contact part through the pressure-sensitive adhesive tape in the push-button switch to bring the movable contact part into contact with the fixed contact part.

The pressure-sensitive adhesive tape according to the present invention is for push-button switch, and it contains a supporting base material and a pressure-sensitive adhesive layer formed on one side of the supporting base material. The supporting base material of the pressure-sensitive adhesive tape has a thickness of at least 25 µm and at most 100 µm. The supporting base material has a difference in the rate of dimensional change in the lengthwise and crosswise directions of the supporting base material after heating of from ±0.01% to ±6%, and has a tensile strength of the supporting base material after heating of at least 0.7 N/mm.

In one preferred embodiment, the supporting base material is a fluororesin base material formed into a sheet by a casting method.

In one preferred embodiment, the thickness of the supporting base material is at least 50 µm and at most 100 µm.

### ADVANTAGE OF THE INVENTION

According to the present invention, the thickness of the supporting base material of the pressure-sensitive adhesive tape is at least 25 µm and at most 100 µm, and the supporting base material has characteristics that the difference in the rate of dimensional change in the lengthwise and crosswise directions of the supporting base material after heating is from ±0.01% to ±6% and that the tensile strength is at least 0.7 N/mm. Accordingly, floating of the pressure-sensitive adhesive tape at the time of performing reflow soldering can be suppressed. Further, the pressure-sensitive adhesive tape can be stuck without disadvantages such as elongation thereof when the pressure-sensitive adhesive tape is peeled off from a release liner or stuck to a housing of a push-button switch.

### BRIEF DESCRIPTION OF THE DRAWINGS

[FIG. 1] FIG. 1 is a cross-sectional view showing a constitution of a general push-button switch 1000.
[FIG. 2] FIG. 2 is a graph showing a load-move amount diagram of a push-button switch.
[FIG. 3] FIG. 3 is a cross-sectional view showing a constitution of a push-button switch 100 according to an embodiment of the present invention.
[FIG. 4] FIG. 4 is a perspective view showing a constitution of a push-button switch 100 according to an embodiment of the present invention.

### MODE FOR CARRYING OUT THE INVENTION

Preferred embodiments of the present invention are described below with reference to the drawings. Items that are matters other than the items to which reference is particularly made in this specification and are necessary for carrying out the present invention can be grasped as matters of design variation for those skilled in the art based on conventional technology in this field. The present invention can be carried out based on the contents disclosed by this specification and the drawings, and the technical common knowledge in this field. Incidentally, the present invention should not be limited to the following embodiments.

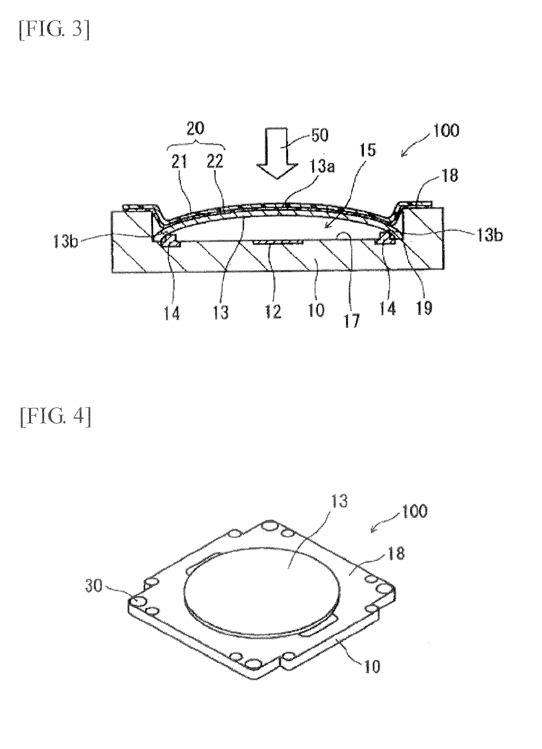

FIG. 3 is a cross-sectional view schematically showing a constitution of a push-button switch 100 according to an embodiment of the present invention. The push-button switch 100 of this embodiment is provided with a housing 10 having an opening 15 in an upper portion thereof and a pressure-sensitive adhesive tape 20 for sealing the opening 15 of the housing 10. Incidentally, FIG. 4 is a perspective view schematically showing a constitution of the push-button switch 100 containing the housing 10 before the pressure-sensitive adhesive tape 20 is stuck thereto.

In the constitution of this embodiment, a fixed contact part (first terminal) 12 is provided on a bottom surface 17 in the housing 10. Further, in the housing 10, a dome-shaped movable contact part 13 is provided so as to cover the fixed contact part 12. The housing 10 of this embodiment is composed of a resin (e.g., a liquid crystal polymer (LCP), polyphthalamide (PPA), polyphenylene sulfide (PPS)). Further, the movable contact part 13 of this embodiment is composed of a metal material (e.g., aluminum), and may be called a metal dome.

The movable contact part 13 is constituted so that a central site 13a comes into contact with the fixed contact part (first terminal) 12, when pushed in the direction of the arrow 50. Further, a lower end site 13b of the movable contact part 13 is positioned at a corner part 19 in the opening 15 of the housing 10. In the vicinity of the corner part 19 in the opening 15 of the housing 10, a second fixed contact part (second terminal) 14 is disposed, and the lower end site 13b of the movable contact part 13 is constituted so as to come into contact with the second fixed contact part (second terminal) 14. Incidentally, the lower end site 13b of the movable contact part 13 may be constituted so as to come into contact with the second fixed contact part (second terminal) 14, when the movable contact part 13 is pushed in the direction of the arrow 50 to bring the central site 13a into contact with the fixed contact part (first terminal) 12.

The pressure-sensitive adhesive tape 20 of this embodiment is composed of a supporting base material 21 and a pressure-sensitive adhesive layer 22 formed on one side of the supporting base material 21. In the example shown in FIG. 3, the pressure-sensitive adhesive layer 22 of the pressure-sensitive adhesive tape 20 is formed on a lower surface of the supporting base material 21. The pressure-sensitive adhesive layer 22 of the pressure-sensitive adhesive tape 20 is in contact with a part of the housing 10 (specifically, an upper end part 18 of the housing 10) and a part of the movable contact part 13 (specifically, most sites except for the periphery of the corner part 19). The pressure-sensitive adhesive tape 20 seals the opening 15 of the housing 10 by adhesion of the pressure-sensitive adhesive layer 22 of this pressure-sensitive adhesive tape 20.

The thickness of the supporting base material 21 of the pressure-sensitive adhesive tape 20 of this embodiment is at least 25 µm and at most 100 µm. In a preferred example of this embodiment, the thickness of the supporting base material 21 is more than 25 µm and at most 100 µm, or at least 50 µm and at most 100 µm. In another preferred example of this embodiment, the thickness of the supporting base material 21 is 50 µm. The thickness of the supporting base material 21 herein means the average thickness, and for example, a tolerance of ±3 µm may be contained. Incidentally, the average thickness value is a value obtained by a 1/1000 dial gauge in accordance with JIS C2107, and the tolerance is a value obtained by ±3σ from the standard deviation σ of measured thickness values.

Then, the supporting base material 21 of this embodiment has a characteristic that the difference in the rate of dimensional change in the lengthwise and crosswise directions of the supporting base material 21 after heating is from ±0.01% to ±6%, and has a characteristic that the tensile strength of the supporting base material 21 after heating is at least 0.7 N/mm. That is to say, the pressure-sensitive adhesive tape 20 containing the supporting base material 21 showing physical properties that the difference in the rate of dimensional change in the lengthwise and crosswise directions of the supporting base material 21 under the predetermined thickness condition is from ±0.01% to ±6% and that the tensile strength is at least 0.7 N/mm is used in the push-button switch 100 of this embodiment.

Further, the supporting base material 21 of this embodiment is a fluororesin base material prepared by a casting method. The supporting base material 21 composed of the fluororesin base material has flexibility and heat resistance against reflow soldering heat. This is therefore preferred. Furthermore, one obtained by forming the fluororesin into a sheet by the casting method has the advantage of having good thickness accuracy even when the pressure-sensitive adhesive tape is reduced in thickness in response to the reduction in thickness of the push-button switch (e.g., the case where one in which the thickness of the supporting base material 21 is at most 100 µm is required).

The fluororesins of this embodiment include polytetrafluoroethylene (PTFE), tetrafluoroethylene-perfluoroalkyl vinyl ether copolymers (PFAs), tetrafluoroethylene-hexafluoropropylene copolymers (FEPs), ethylene-tetrafluoroethylene copolymers (ETFEs), polyvinylidene fluoride (PVDF) and the like. Of these, polytetrafluoroethylene (PTFE) is preferred. As the fluororesin, there is used a dispersion obtained by emulsion polymerization.

Methods for forming the fluororesin into a sheet by the casting method include, for example, a method of applying a dispersion of the fluororesin onto a heat-resistant carrier sheet, and firing this at a temperature equivalent to or more than the melting point of the fluororesin. A fluororesin sheet is obtained by separating the resulting fired sheet from the heat-resistant carrier sheet.

As the heat-resistant carrier sheet, one whose material can withstand the firing temperature of the dispersion of the fluororesin can be used without particular limitation. For example,use can be made of a polyimide film, a polyetheretherketone film, a polyethersulfone film or a metal film. Further, in order to more smoothly perform the separation of the fired sheet, the heat-resistant carrier sheet can also be coated with a silicone-based release agent.

Dispersion media used in the dispersion of the fluororesin include, for example, water. The solid concentration of the dispersion of the fluororesin is from 20 to 80% by weight, and preferably from 40 to 60% by weight, in terms of workability. Coating of the dispersion can be performed by various methods such as a dipping method, a spray method and a brush coating method.

A firing method is not particularly limited. Firing may be performed at once by single-stage heating. However, multistage heating is preferred in which heating is first performed at the evaporation temperature of the dispersion medium used in the dispersion of the fluororesin to remove a part or most of the dispersion medium by evaporation, and then, heating is performed at the melting point abnormal of the fluororesin to perform firing.

The supporting base material 21 can be prepared to a thickness, for example, within a range of at most 100 µm by repeating coating and firing. In the constitution of this embodiment, the thickness of the supporting base material 21 is adjusted to at least 25 µm and at most 100 µm (or at least 50 µm and at most 100 µm). In the case of preparing the supporting base material 21 having such a thickness, as to whether prepared by single coating of the dispersion of the fluororesin or by multiple coating, preferred one may be appropriately adopted depending on various conditions. According to the casting method, it is possible to obtain the supporting base material having better thickness accuracy as compared to a method of cutting a molded product, because of preparing it by applying the dispersion of the fluororesin onto a heat-resistant carrier sheet.

Incidentally, for the purpose of enhancing adhesive properties, surface treatment is preferably performed to the supporting base material 21 of the fluororesin sheet. As the surface treatment, use can be made of wet treatment such as alkali etching, dry treatment such as sputter etching, and the like.

For formation of the pressure-sensitive adhesive layer 22 provided on the supporting base material 21 of this embodiment, a pressure-sensitive adhesive that does not generate separation or displacement in use of the pressure-sensitive adhesive tape 20 is preferably used. Although the pressure-sensitive adhesive is not particularly limited, a silicone-based pressure-sensitive adhesive that causes poor contact is unfavorable, because the pressure-sensitive adhesive tape 20 is used near an electric contact. However, when a countermeasure to poor connection can be made, the silicone-based pressure-sensitive adhesive may be used. The pressure-sensitive adhesives include, for example, rubber-based pressure-sensitive adhesives and acrylic pressure-sensitive adhesives. Of these, the acrylic pressure-sensitive adhesives having good heat resistance are preferred.

As a base polymer of the acrylic pressure-sensitive adhesive, preferred is a copolymer of an alkyl acrylate ester and a carboxyl group-containing monomer, which has a weight average molecular weight of at least 1,000,000. The weight average molecular weight of the copolymer is typically from about 1,000,000 to 4,000,000, and preferably from 1,000,000 to 2,000,000.

As the alkyl acrylate ester as a component of the above-mentioned copolymer, use can preferably be made of one in which the alkyl group has 3 to 10 carbon atoms, such as butyl acrylate, propyl acrylate, hexyl acrylate, 2-ethylhexyl acrylate, isooctyl acrylate or isononyl acrylate. The carboxyl group-containing monomers include acrylic acid, methacrylic acid, fumaric acid, maleic acid, itaconic acid and the like. Of these, preferred are acrylic acid and methacrylic acid, and particularly preferred is acrylic acid.

For the weight ratio of the alkyl acrylate ester and the carboxyl group-containing monomer in the above-mentioned copolymer, the former is from 80 to 99.5% by weight, and the latter is from 0.5 to 20% by weight. Preferably, the former is from 88 to 97% by weight, and the latter is from 3 to 12% by weight. Incidentally, in the copolymer as the base polymer, in addition to the above-mentioned monomers, use can also be made of a functional group-containing monomer such as a hydroxyl group-containing monomer, a N element-containing monomer or an epoxy group-containing monomer, further vinyl acetate, styrene or the like, within the range not impairing the object of the present invention.

The above-mentioned copolymer can be prepared, for example, by a method of blending the alkyl acrylate ester, the carboxyl group-containing monomer and an organic solvent (e.g., toluene or the like) in a flask equipped with a stirrer, a thermometer, a condenser and a nitrogen-introducing tube and replacing the inside of the flask with nitrogen, followed by heating in the presence of a polymerization initiator (e.g., benzoyl peroxide, azobisisobutyronitrile or the like) at a predetermined temperature to perform polymerization. Incidentally, although the heating temperature and polymerization time are not particularly limited, typically, it is preferred that the heating temperature is from about 50 to 70°C and that the polymerization time is from about 5 to 7 hours.

Various tackifiers may be blended in the above-mentioned acrylic copolymer. In order to form the pressure-sensitive adhesive layer 22 that has heat resistance and does not generate displacement or separation either during or after the process, the pressure-sensitive adhesive in which two kinds of tackifier resins, a high softening point resin and a low softening point resin, are blended in the above-mentioned acrylic copolymer is preferably used. The pressure-sensitive adhesive layer formed by a pressure-sensitive adhesive composition in which such a tackifier is blended has a large adhesive force in both initial and after heating, and further, the pressure-sensitive adhesive layer that is small in change of retention force can be formed.

The high softening point resin has a softening point of from about 100 to 150°C, and the low softening point resin has a softening point of from about 60 to 110°C. However, the high softening point resin has 10°C or more higher softening point than the low softening point resin. The blending amount of the high softening point resin is from 8 to 60 parts by weight, and desirably from 20 to 50 parts by weight, based on 100 parts by weight (solid content) of the above-mentioned copolymer. The blending amount of the low softening point resin is from 5 to 40 parts by weight, and desirably from 15 to 30 parts by weight, based on 100 parts by weight (solid content) of the above-mentioned copolymer. Further, for the blending ratio of the high softening point resin and the low softening point resin, they are preferably blended at a low softening point resin/high softening point resin weight ratio of from 1/1 to 1/2, in order to balance the characteristics of the initial adhesive force and retention force and those after heating.

Resins that have hitherto been used as the tackifier resins may be used as the high softening point resin and the low softening point resin without any particular limitation. Examples thereof include terpene resins, terpene phenol resins, petroleum resins, coumarone-indene resins, rosin-based resins, (alkyl)phenolic resins, xylene-based resins or hydrogenated materials thereof. From these, ones having the above-mentioned softening points are each selected to use.

Further, a crosslinking agent may be blended in the pressure-sensitive adhesive composition of this embodiment. The blending amount of the crosslinking agent is preferably from about 0.05 to 5 parts by weight based on 100 parts by weight of the above-mentioned copolymer. The kind of crosslinking agent is not particularly limited, and use can be made of one that has hitherto been used in the pressure-sensitive adhesive. Specific examples thereof include isocyanate-based crosslinking agents such as hexamethylene diisocyanate, amine-based crosslinking agents such as bisamine, epoxy-based crosslinking agents such as ethylene glycol diglycidyl ether, and the like. In addition, it is optional to add various additives.

A method for preparing the pressure-sensitive adhesive tape 20 for a push-button switch of this embodiment contains, for example, applying a pressure-sensitive adhesive solution to one side of the supporting base material, and drying it. The drying temperature and time are not particularly limited, but typically from about 100 to 180°C and from about 2 to 10 minutes. The thickness of the pressure-sensitive adhesive layer 22 is not particularly limited, but from about 5 to 50 µm in the solid content. From the viewpoints of the reduction in thickness and click feeling, it is preferred to be desirably from 8 to 20 µm.

In the case of the supporting base material 21 of this embodiment, the supporting base material 21 has a physical property that the difference in the rate of dimensional change in the lengthwise and crosswise directions after heating is from ±0.01% to ±6% (at least ±0.01% and at most ±6%). In this embodiment, the difference in the rate of dimensional change in the lengthwise and crosswise directions means the difference between the rate of dimensional change [%] in the lengthwise direction (flow direction of the film, MD: machine direction) and the rate of dimensional change [%] in the crosswise direction (vertical direction of the film, TD: transverse direction). Here, in this specification, "the difference in the rate of dimensional change in the lengthwise and crosswise directions of the supporting base material after heating is from ±0.01% to ±6% (at least ±0.01% and at most ±6%)" means that the difference in the rate of dimensional change in the lengthwise and crosswise directions is within a range of "from 0.01% to 6%" or "from -6% to -0.01%". That is to say, it means that the absolute value of the difference in the rate of dimensional change in the lengthwise and crosswise directions is within a range of "from 0.01 % to 6%".

The difference in the rate of dimensional change in the lengthwise and crosswise directions of the supporting base material 21 after heating is calculated from the rate of shrinkage in the lengthwise directions and that in the crosswise direction, after heating. First, 50 mm x 250 mm is cut out from the pressure-sensitive adhesive tape 20 obtained by the preparing method of this embodiment, and with respect to a gauge length of 200 mm, the percentage of the amount of change in gauge length after heating at 260°C for 5 minutes/the length before heating is determined. Taking that value as the rate of dimensional change in the lengthwise direction or crosswise direction (the rate of shrinkage after heating), the difference in the rate of dimensional change in the lengthwise and crosswise directions is calculated therefrom. As a preferred example, the difference in the rate of dimensional change in the lengthwise and crosswise directions after heating is at most ±6%, more preferably at most ±3%, and still more preferably at most ±1% (e.g., ±0.5% or less). That is to say, the absolute value of the difference in the rate of dimensional change in the lengthwise and crosswise directions is at most 6%, more preferably at most 3%, and still more preferably at most 1% (e.g., 0.5% or less). Incidentally, measurement of these is made in accordance with JIS K7133.

Further, in the case of the supporting base material 21 of this embodiment, the supporting base material 21 has a physical property that a tensile strength is at least 0.7 N/mm. The upper limit of the tensile strength is not particularly clearly specified, and determined based on the tensile strength (e.g., 1.72 N/mm, 2.89 N/mm or the like) of the supporting base material 21 actually possessed by the pressure-sensitive adhesive tape 20 obtained by the preparing method of this embodiment, among values of at least 0.7 N/mm in tensile strength.

This tensile strength is determined as described below. First, 10 mm x 200 mm is cut out from the pressure-sensitive adhesive tape 20 obtained by the preparing method of this embodiment, and then, measurement is made by using a tensile tester (AG-1KNI manufactured by Shimadzu Corporation) under conditions of a film width of 10 mm, a chuck distance of 100 mm, a gauge distance of 50 mm, a tensile rate of 200 mm/min and a measuring temperature of 23°C. The tensile strength is obtained by the measurement using this tensile tester.

As a preferred example, the tensile strength (MD) of the supporting base material 21 is, for example, at least 1.72 N/mm, and more preferably at least 2.89 N/mm. Further, as a preferred example, the tensile strength (TD) of the supporting base material 21 is, for example, at least 1.55 N/mm, and more preferably at least 2.78 N/mm.

In addition, in the case of the supporting base material 21 of this embodiment, it has a physical property that the elongation with respect to a load of 1 N/10 mm is at most 2.1%. Measurement of this elongation with respect to a load of 1 N/10 mm is made in the same manner as the measuring method of the tensile strength. The gauge length at the time when the load reaches 1 N/10 mm is measured, and the percentage of the amount of change in gauge length/the gauge distance is determined. As a preferred example, the elongation (MD) with respect to a load of 1 N/10 mm of the supporting base material 21 is at most 2.1%, and more preferably at most 0.1%.

Some examples relating to the present invention are described below, but it is not intended to limit the present invention to ones shown in such examples.

### <Example 1>

### (Preparation of Supporting Base Material)

First, an aqueous dispersion of a PTFE powder (average particle size: 0.25 µm) having a solid concentration of 60% by weight was applied to a polyimide carrier sheet by dipping, and thereafter, heated under conditions of 90°C x 2 minutes to remove water. Then, firing was performed at 360°C for 2 minutes to prepare a PTFE sheet having a thickness of 25 µm. This PTFE sheet whose one side was subjected to sputter etching treatment was used as a supporting base material.

### (Preparation of Pressure-Sensitive Adhesive Composition)

In a flask (volume: 1 liter) equipped with a stirrer, a thermometer, a condenser and a nitrogen-introducing tube, 90 g of butyl acrylate, 10 g of acrylic acid and 150 g of toluene were blended, and nitrogen replacement was conducted with stirring for 1 hour. Then, thereto was added 0.1 g of benzoyl peroxide, followed by polymerization at a temperature of 60 °C for 6 hours to obtain a solution of a copolymer of butyl acrylate and acrylic acid. The weight average molecular weight of this copolymer was measured with a HPLC (high-performance liquid chromatograph). As a result, it was 1,400,000.

To 100 parts by weight (solid content) of the above-mentioned copolymer, 32 parts by weight of a phenol resin having a softening point of 130°C (Sumilite Resin PR-51732, manufactured by Sumitomo Durez Co., Ltd.), 20 parts by weight of a terpene resin having a softening point of 80°C (YS Resin PX800, manufactured by Yasuhara Chemical Co., Ltd.) and 3 parts by weight of hexamethylene diisocyanate (Coronate L, manufactured by Nippon Polyurethane Industry Co., Ltd.) as a crosslinking agent were blended, followed by dilution with toluene to 14% by weight on a solid content basis to obtain a pressure-sensitive adhesive composition (solution).

### (Preparation of Pressure-Sensitive Adhesive Tape)

The above-mentioned pressure-sensitive adhesive composition was applied to the surface-treated side of the above-mentioned supporting base material to a solid content thickness of 10 µm, and dry-cured with a hot air dryer under conditions of 130°C x 5 minutes to obtain a pressure-sensitive adhesive tape.

### <Example 2>

In Example 2, a pressure-sensitive adhesive tape was prepared in the same manner as in Example 1 except for preparing a PTFE sheet of a supporting base material having a thickness of 50 µm.

### <Comparative Example 1>

In Comparative Example 1, a pressure-sensitive adhesive tape was prepared in the same manner as in Example 1 except for preparing a PTFE sheet of a supporting base material having a thickness of 15 µm.

### <Comparative Example 2>

In Comparative Example 2, a pressure-sensitive adhesive tape was prepared in the same manner as in Example 1 except for using as a supporting base material a PTFE sheet obtained by cutting a molded-fired product of a molding powder of PTFE to a thickness of 25 µm and subjecting one side thereof to sputter etching treatment.

### <Comparative Example 3>

In Comparative Example 3, a pressure-sensitive adhesive tape was prepared in the same manner as in Example 1 except for using as a supporting base material a PTFE sheet obtained by cutting a molded-fired product of a molding powder of PTFE to a thickness of 50 µm and subjecting one side thereof to sputter etching treatment.

For the pressure-sensitive adhesive tapes of Example 1, Example 2, Comparative Example 1, Comparative Example 2 and Comparative Example 3, the tensile strength, the rate of shrinkage after heating, the elongation with respect to a load of 1 N/10 mm and the sealing property were measured. Measuring methods are as follows.

### (Tensile Strength)

A 10 mm x 200 mm was cut out from the pressure-sensitive adhesive tape, and subjected to measurement using a tensile tester at a film width of 10 mm, a chuck distance of 100 mm, a gauge distance of 50 mm, a tensile rate of 200 mm/min and a measuring temperature of 23°C.

### (Rate of Shrinkage after Heating)

A 50 mm x 250 mm was cut out from the pressure-sensitive adhesive tape, and with respect to a gauge length of 200 mm, the percentage of the amount of change in gauge length after heating at 260°C for 5 minutes/the length before heating was determined.

### (Elongation with Respect to Load of 1 N/10 mm)

The gauge length at the time when the load reached 1 N/10 mm was measured in the same manner as in the tensile strength measuring method, and the percentage of the amount of change in gauge length/the gauge distance was determined.

### (Sealing Property)

The pressure-sensitive adhesive tape was stuck to a push-button switch having an acting force of 13 N and a returning force of 6 N in a state where no pressure-sensitive adhesive tape was stuck, and exposed to heating at 260°C for 5 minutes to confirm the sealing property. A case where floating and displacement of the pressure-sensitive adhesive tape were not observed was judged as "good", and a case where floating or displacement of the pressure-sensitive adhesive tape was observed was judged as "poor".

### (Sealing Property after Stretch Bonding at Load of 1 N/10 mm)

The pressure-sensitive adhesive tape was stretched at 200 mm/min by using a tensile tester, and the pressure-sensitive adhesive tape at the time when the load reached 1 N/10 mm was stuck to a push-button switch. Evaluation was made in the same manner as the above-mentioned sealing property evaluation method.

**[Table 1]**

| | Ex 1 | Ex 2 | Comp. Ex 1 | Comp. Ex 2 | Comp. Ex 3 |
|---|---|---|---|---|---|
| Film Preparing Method | Casting | | | Cutting | |
| Base Material Thickness [µm] | 25 | 50 | 15 | 25 | 50 |
| Tensile Strength (MD) [N/mm] | 1.72 | 2.89 | 0.64 | 0.95 | 2.30 |
| Tensile Strength (TD) [N/mm] | 1.55 | 2.78 | 0.52 | 0.73 | 1.92 |
| Rate of Shrinkage after Heating (MD) [%] | 2.0% | 2.5% | 2.0% | 7.1% | 6.2% |
| Rate of Shrinkage after Heating (TD) [%] | 1.5% | 1.5% | 1.5% | -1.0% | -0.8% |
| Elongation with Respect to Load of 1 N/10 mm (MD) [%] | 2.1% | 0.1% | 4.0% | 1.0% | 0.7% |
| Sealing Property | Good | Good | Good | Poor | Poor |
| Sealing Property after Stretch Bonding at Load of 1 N/10 mm | Good | Good | Poor | Poor | Poor |

As shown in Table 1, the pressure-sensitive adhesive tapes shown in Example 1 and Example 2, each containing the supporting base material obtained by forming the fluororesin into a sheet by the casting method, showed the good results in both tests of the sealing property and the sealing property after stretch bonding at a load of 1 N/10 mm Specifically, the pressure-sensitive adhesive tapes having a difference in the rate of dimensional change in the lengthwise and crosswise directions after heating of at most ±6.0% and a tensile strength of at least 0 7 N/mm (Example 1 and Example 2) do not float even after heated at 260°C for 5 minutes and are excellent in the sealing property

On the other hand, in the pressure-sensitive adhesive tape having a difference in the rate of dimensional change in the lengthwise and crosswise directions after heating of at most ±6.0% and a tensile strength of less than 0 7 N/mm (Comparative Example 1), floating occurs in the test of the sealing property after stretch bonding at a load of 1 N/10 mm Incidentally, the sealing property of Comparative Example 1 was not said to be poor, but was not said to be good, as compared to the sealing property of Example 1 and

### Example 2

From the results of Examples 1 and 2 and Comparative Example 1, it is shown that the pressure-sensitive adhesive tape using the supporting base material having a difference in the rate of dimensional change in the lengthwise and crosswise directions after heating of at most ±6.0% and a tensile strength of at least 0.7 N/mm is preferred for sealing the push-button switch without floating of the pressure-sensitive adhesive tape even in the reflow soldering process. That is to say, when the pressure-sensitive adhesive tapes of Examples 1 and 2 are used, the push-button switch 100 can be obtained in which the pressure-sensitive adhesive tape 20 is suppressed from deformation due to extension.

Incidentally, in order to examine whether or not a thickness element of the supporting base material was essential for exclusively exerting an influence on the sealing property, the pressure-sensitive adhesive tapes containing the supporting base materials prepared by the cutting method (Comparative Example 2 and Comparative Example 3) were evaluated. The thickness of the supporting base material in Comparative Example 2 was 25 µm (the same as in Example 1), and the thickness of the supporting base material in Comparative Example 3 was 50 µm (the same as in Example 2). However, Comparative Example 2 and Comparative Example 3 were both poor in the sealing property. It was therefore indicated that the thickness element of the supporting base material was not only essential for exerting an influence on the sealing property.

When Example 1 is compared to Comparative Example 2, the difference in the rate of dimensional change in the lengthwise and crosswise directions in Example 1 is 0.5%, whereas difference in the rate of dimensional change in the lengthwise and crosswise directions in Comparative Example 2 is 8.1%, from the values of the rates (%) of shrinkage after heating in (MD) and (TD). Similarly, when Example 2 is compared to Comparative Example 3, the difference in the rate of dimensional change in the lengthwise and crosswise directions in Example 2 is 1.0%, whereas difference in the rate of dimensional change in the lengthwise and crosswise directions in Comparative Example 3 is 7.0%. When the difference in the rate of dimensional change in the lengthwise and crosswise directions exceeds 6.0% (or is 7.0% or more), an influence of deterioration in the sealing property appears. It will therefore be understood that even when the thickness is the same, it is necessary to decrease the difference in the rate of dimensional change in the lengthwise and crosswise directions to at most 6.0%.

The reason why the difference in the rate of dimensional change in the lengthwise and crosswise directions of the supporting base materials in Comparative Examples 2 and 3 using the cutting method is larger than that in Examples 1 and 2 is not exactly known. However, according to presumption of the present inventors, firing unevenness occurs in the case of the cutting method, and the firing unevenness might have an influence on the difference in the rate of dimensional change in the lengthwise and crosswise directions, because the molding powder of the fluororesin (PTFE) is molded into a circular cylindrical shape and subjected to firing, and the fired product is cut to the predetermined thickness. Alternatively, a film formation state of the fluororesin (PTFE) might be different at the molecular level between the casting method and the cutting method, and the difference in the film formation state might have an influence on the difference in the rate of dimensional change in the lengthwise and crosswise directions. In addition, thickness unevenness is liable to occur in the cutting method, as compared to the casting method, so that the thickness unevenness might cause the difference in the rate of dimensional change in the lengthwise and crosswise directions.

Further, when Example 1 is compared to Comparative Example 1, the difference in the rate of dimensional change in the lengthwise and crosswise directions in Example 1 (0.5%) is the same as in Comparative Example 1 (0.5%). However, the value of the tensile strength (MD) in Comparative Example 1 (0.64 N/mm) is largely decreased to less than 0.7 N/mm, as compared to that in Example 1 (1.72 N/mm). It is presumed that this low tensile strength (MD) in Comparative Example 1 has an influence on the elongation (MD) with respect to a load of 1 N/10 mm, resulting in exerting the influence on deterioration in the sealing property.

As described above, in the pressure-sensitive adhesive tape 20 for a push-button switch according to the embodiment of the present invention, the supporting base material 21 obtained by forming the fluororesin into a sheet by the casting method has a difference in the rate of dimensional change in the lengthwise and crosswise directions after heating of at most ±6%, and has a tensile strength of at least 0.7 N/mm when the thickness of the supporting base material obtained by forming a sheet by the casting method is within a range of from 25 µm to 100 µm.

In the case where the difference in the rate of dimensional change in the lengthwise and crosswise directions after heating is at most ±6%, the pressure-sensitive adhesive tape 20 can be prevented from floating from an end thereof even when the supporting base material 21 shrinks at the time of reflow soldering. To explain with the example shown in FIG. 3, the pressure-sensitive adhesive tape 20 can be prevented from floating from the end of the pressure-sensitive adhesive tape 20 (e.g., the periphery of the upper end 18 of the housing 10). Accordingly, the push-button switch 100 excellent in the sealing property due to the pressure-sensitive adhesive tape 20 can be realized.

In addition, in the case where the tensile strength of the supporting base material 21 is at least 0.7 N/mm, the pressure-sensitive adhesive tape 20 can be stuck without disadvantages such as elongation thereof when the pressure-sensitive adhesive tape 20 is peeled off from a release liner (not shown) attached to a surface of the pressure-sensitive adhesive layer 22 or stuck to the housing 10 of the push-button switch 100.

The push-button switch 100 of this embodiment is applicable to portable electronic devices such as cell-phones, portable players and digital cameras. As an example, the push-button switch 100 of this embodiment and a stem (see "7" of FIG. 1) can be used in a combined form in the portable electronic devices. The stem is a member for pushing the movable contact part (metal dome) 13 through the pressure-sensitive adhesive tape 20 in the push-button switch 100 to bring the movable contact part 13 into contact with the fixed contact part 12. The push-button switch 100 of this embodiment is excellent in the sealing property for sealing the opening 15 of the housing 10, even when the pressure-sensitive adhesive tape 20 reduced in thickness (the thickness of the supporting base material is at most 100 µm, and preferably about 50±5 µm) is used, so that it can be suitably used in the portable electronic devices (e.g., cell-phones) as described above.

Although the present invention has been described above in detail for purposes of illustration only, the present invention can be carried out in another mode, and various changes may be made without departing from the scope thereof.

This application is based on Japanese Patent Application (No. 2011-198453) filed on September 12, 2011, and the entire contents of which are incorporated herein by reference.

### INDUSTRIAL APPLICABILITY

According to the present invention, the push-button switch can be provided in which floating of the pressure-sensitive adhesive tape is suppressed at the time of performing reflow soldering.

### DESCRIPTION OF REFERENCE NUMERALS AND SIGNS

- 10: Housing
- 12: Fixed contact part
- 13: Movable contact part
- 13a: Central site of the movable contact part
- 13b: Lower end site of the movable contact part
- 14: Second fixed contact part
- 15: Opening
- 17: Bottom surface
- 18: Upper end part
- 19: Corner part
- 20: Pressure-sensitive adhesive tape (pressure-sensitive adhesive tape for a push-button switch)
- 21: Supporting base material
- 22: Pressure-sensitive adhesive layer
- 30: Box connection
- 50: Arrow (pressing direction)
- 100: Push-button switch
- 101: Housing
- 101a: Opening
- 101b: Bottom surface
- 102: Fixed contact part
- 103: Movable contact part
- 104: Electrode
- 106: Frame
- 107: Stem
- 121: Lead
- 131: Lead
- 150: Pressure-sensitive adhesive tape
- 151: Supporting bas material
- 152: Pressure-sensitive adhesive layer
- 1000: Push-button switch

## Claims

1. A push-button switch comprising
a housing having an opening in an upper portion thereof and
a pressure-sensitive adhesive tape sealing the opening of the housing, wherein
a fixed contact part is provided on a bottom surface in the housing,
a dome-shaped movable contact part is provided so as to cover the fixed contact part in the housing, wherein
the pressure-sensitive adhesive tape comprises
a supporting base material and
a pressure-sensitive adhesive layer formed on one side of the supporting base material,
the pressure-sensitive adhesive layer of the pressure-sensitive adhesive tape is in contact with a part of the housing and a part of the movable contact part,
the supporting base material of the pressure-sensitive adhesive tape has a thickness of at least 25 µm and at most 100 µm, and
the supporting base material has a difference in the rate of dimensional change in the lengthwise and crosswise directions of the supporting base material after heating of from ±0.01% to ±6%, and the supporting base material has a tensile strength of at least 0.7 N/mm.

2. The push-button switch according to claim 1, wherein the supporting base material is a fluororesin base material formed into a sheet by a casting method.

3. The push-button switch according to claim 1 or 2, wherein the thickness of the supporting base material is at least 50 µm and at most 100 µm.

4. A portable electronic device comprising
the push-button switch described in any one of claims 1 to 3 and
a stem of pushing the movable contact part through the pressure-sensitive adhesive tape in the push-button switch to bring the movable contact part into contact with the fixed contact part.

5. A pressure-sensitive adhesive tape for push-button switch, comprising
a supporting base material and
a pressure-sensitive adhesive layer formed on one side of the supporting base material, wherein
the supporting base material of the pressure-sensitive adhesive tape has a thickness of at least 25 µm and at most 100 µm, and
the supporting base material has a difference in the rate of dimensional change in the lengthwise and crosswise directions of the supporting base material after heating of from ±0.01% to ±6%, and the supporting base material has a tensile strength of at least 0.7 N/mm.

6. The pressure-sensitive adhesive tape according to claim 5, wherein the supporting base material is a fluororesin base material formed into a sheet by a casting method.

7. The pressure-sensitive adhesive tape according to claim 5 or 6, wherein the thickness of the supporting base material is at least 50 µm and at most 100 µm.
